**Europäisches Patentamt**

**European Patent Office**

**Office européen des brevets**

(19)

(11) Publication number : **0 298 612 B1**

# EUROPEAN PATENT SPECIFICATION

(12)

(45) Date of publication of patent specification :
**08.04.92 Bulletin 92/15**

(51) Int. Cl.⁵ : **G11B 11/10**

(21) Application number : **88305348.0**

(22) Date of filing : **10.06.88**

(54) **An optical memory device.**

(30) Priority : **12.06.87 JP 147501/87**

(43) Date of publication of application :
**11.01.89 Bulletin 89/02**

(45) Publication of the grant of the patent :
**08.04.92 Bulletin 92/15**

(84) Designated Contracting States :
**DE FR GB IT**

(56) References cited :
EP-A- 0 216 634
PATENT ABSTRACTS OF JAPAN, vol. 12, no.
166 (P-704)[3013], 19th May 1988; & JP-A-62
279 542 (HITACHI LTD) 04-12-1987
PATENT ABSTRACTS OF JAPAN, vol. 12, no.
175 (P-707)[3022], 25th May 1988; & JP-A-62
285 254 (KONISHIROKU PHOTO IND. CO., LTD)
11-12-1987
PATENT ABSTRACTS OF JAPAN, vol. 10, no.
198 (P-476)[2254], 11th July 1986; & JP-A-61 39
955 (RICOH CO., LTD) 26-02-1986
PATENT ABSTRACTS OF JAPAN, vol. 11, no.
170 (P-581)[2617], 2nd June 1987; & JP-A-62
1153 (RICOH CO., LTD) 07-01-1987
PATENT ABSTRACTS OF JAPAN, vol. 10, no.
210 (P-479)[2266], 23rd July 1986; & JP-A-61 48
151 (CANON INC.) 08-03-1986

(73) Proprietor : **SHARP KABUSHIKI KAISHA**
**22-22 Nagaike-cho Abeno-ku**
**Osaka 545 (JP)**

(72) Inventor : **Takahashi, Akira**
**9-1-506, Akishinosatsuki-cho**
**Nara-shi Nara-ken (JP)**
Inventor : **Mieda, Michinobu**
**2613-1, Ichinomoto-cho**
**Tenri-shi Nara-ken (JP)**
Inventor : **Miyake, Tomoyuki**
**2613-1, Ichinomoto-cho**
**Tenri-shi Nara-ken (JP)**
Inventor : **Murakami, Yoshiteru**
**9-16-605, Ohhata-cho**
**Nishinomiya-shi Hyogo-ken (JP)**
Inventor : **Katayama, Hiroyuki**
**B6-205 Nakatomigaoka Daisandanchi**
**1-4162-1 Nakatomigaoka Nara-shi Nara-ken**
**(JP)**
Inventor : **Ohta, Kenji**
**3-9-17, Hirosedai Kawai-cho**
**Kitakatsuragi-gun Nara-ken (JP)**

(74) Representative : **Brown, Kenneth Richard et al**
**R.G.C. Jenkins & Co. 26 Caxton Street**
**London SW1H 0RJ (GB)**

EP 0 298 612 B1

Jouve, 18, rue Saint-Denis, 75001 PARIS

## Description

## BACKGROUND OF THE INVENTION

### 1. Field of the invention:

This invention relates to an optical memory device by which at least one of the information recording, reproducing, and erasing operations is carried out by the use of a laser beam.

### 2. Description of the prior art:

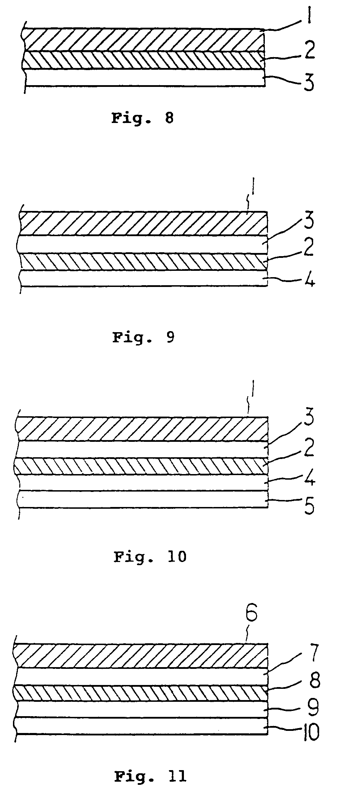

In recent years, various research and development efforts have been made in many fields to meet the increasing demand for optical memory devices of high density and large capacity. Particularly, an add-on memory with which the user can add information and an add-on and erasable memory with which the user can add information and erase the recorded information have a wide range of applications, and accordingly a variety of materials and systems have been proposed for these types of optical memory devices. TeOx, TeSe, TeC, etc., can be used as a material of the former memory, while a thin film made of a rare earth transition metal alloy such as GdTbFe, GdTbDyFe, TbFeCo, etc., can be used as a material for the latter memory. However, these materials for a recording medium that is an essential component of the add-on or the add-on and erasable memory lack in corrosion resistance and are easily oxidized. The oxidization of the recording medium results in diminished recording sensitivity. To overcome this problem, an optical memory device with add-on memory performance shown in Figure **8** has been proposed in which on a transparent substrate **1**, a recording medium layer **2** and a protective layer **3** for protecting the recording medium layer **2** against corrosion based on oxidization or the like are disposed in that order. The recording medium layer **2** is formed by the vacuum evaporation method, the sputtering method or the like. An optical memory device with add-on and erasable memory performance shown in Figure **9** has been proposed in which a transparent substrate **1**, a protective layer **3**, a rare earth transition metal alloy thin layer **2**, and a protective layer **4** are disposed in that order. Another optical memory device with add-on and erasable memory performance that is shown in Figure **10** has been also proposed in which a reflective layer **5** is further disposed on the protective layer **4** of the memory device shown in Figure **9**. However, the protective layers 3 and **4** cannot prevent corrosion due to oxidization.

Oxidization of a magneto-optic memory device (i.e., an optical memory device with add-on and erasable memory performance) is described below: Figure **11** shows a conventional magneto-optic memory device investigated by the inventors of the present invention, in which on a glass substrate **6**, a first transparent dielectric protective layer **7** with a thickness of 120 nm of $SiO_2$, a rare earth transition metal alloy thin layer **8** with a thickness of 15 nm of GdTbFe, a second transparent dielectric protective layer **9** with a thickness of 50 nm of $SiO_2$, and a reflective layer **10** with a thickness of 50 nm of Cu are disposed in that order. This magneto-optic memory device was subjected to a high-temperature and high-moisture treatment, resulting in oxidization of the GdTbFe alloy layer **8**. The inventors of the present invention have recognized that the oxidization is caused by oxygen contained in the $SiO_2$ layers **7** and **9**; oxygen separates from the $SiO_2$ layers **7** and **9** while or after the said $SiO_2$ layers are formed, and the oxygen released oxidizes the GdTbFe alloy thin layer **8**. Since oxidization of the rare earth transition metal alloy thin layer **8** seriously impairs the performance of the magnetized recording medium, oxidization is a serious problem for optical memory devices. In a case where the thickness of the rare earth transition metal alloy thin layer **8** is small, even though negligible oxidization arises, the oxidization gives a large influence, and thus must be avoided with the greatest care. Accordingly, the applicant of this patent application has proposed to use aluminum nitride or the like with no oxygen content as a protective film for protecting the rare earth transition metal alloy thin layer **8**. An optical memory device with such construction is disclosed in U.S. Patent Application Serial No. 697,027 filed on January 31, 1985, entitled "MAGNETO-OPTIC MEMORY DEVICE" by Kenji OHTA et al. (This application is a continuation application of Serial No. 489,889 filed on April 29, 1983 which is now abandoned.) The European Counterpart is Application No. 83302419.3 filed on April 28, 1983. However, aluminum nitride mismatches with rare earth transition metal alloy layers, and the production conditions of the aluminum nitride layer must be closely controlled in order to obtain a superior recording medium. Moreover, the aluminum nitride layer has a high thermal conductance, and is inferior in the sensitivity for recording on the recording medium. The aluminum nitride layer has a low C/N ratio, and bits cannot be recorded at a low power level. To overcome these problems, U.S. Patent Application Serial No. 908,716 proposes a protective layer made of aluminium nitride and silicon, which cannot provide a sufficient protective layer performance.

JP-61-39955 describes a protective film for a magnetic film of the nitride of the group III, IV or V elements of the periodic table except silicon to reduce oxygen deterioration.

## SUMMARY OF THE INVENTION

The optical memory device of this invention aims to alleviate some of the aforementioned problems. In accordance with this invention there is provided an optical memory device comprising a substrate, a recording medium layer, and one or more protective layers for protecting said recording medium layer, wherein at least one of said protective layers comprises aluminium tantalum nitride represented by the formula: $(Al_{1-x}Ta_x)_yN_{1-y}$ wherein $0<x\leqq0.1$ and $y=0.5$.

Thus, the invention described herein makes possible the objectives of (1) providing an optical memory device that has a recording medium reliable in resistance against oxidization by oxygen; and (2) providing an optical memory device that has excellent information-recording and reproducing characteristics.

## BRIEF DESCRIPTION OF THE DRAWINGS

This invention may be better understood and its numerous objects and advantages will become apparent to those skilled in the art by reference to the accompanying drawings as follows:

Figure **1** is a sectional view showing an optical memory device of this invention.

Figures **2a** and **2b** are of magnetic characteristic curves showing the relationship between the external magnetic field and the Kerr rotational angle with regard to a reference optical memory device and the optical memory device of Figure **1**.

Figure **3** is a sectional view showing another optical memory device of this invention.

Figure **4** is a sectional view showing another optical memory device of this invention.

Figure **5** is a sectional view showing another optical memory device of this invention.

Figure **6** is a sectional view showing another optical memory device of this invention.

Figure **7** is a sectional view showing another optical memory device of this invention.

Figure **8** is a sectional view showing a conventional optical memory device.

Figure **9** is a sectional view showing another conventional optical memory device.

Figure **10** is a sectional view showing another conventional optical memory device.

Figure **11** is a sectional view showing another conventional optical memory device.

Figure **12a** is of characteristic curves showing a relationship between the laser power and the C/N ratio with regard to the optical memory device shown in Figure **1**.

Figure **12b** is of characteristic curves showing a relationship between the laser power and the bit length with regard to the optical memory device shown in Figure **1**.

Figure **12c** is of characteristic curves showing a relationship between the laser power and the bit length distribution with regard to the optical memory device shown in Figure **1**.

Figure **12d** is of characteristic curves showing a relationship between the external magnetic field and the C/N ratio with regard to the optical memory device shown in Figure **1**.

Figure **12e** is of characteristic curves showing a relationship between the external magnetic field and the bit length with regard to the optical memory device shown in Figure **1**.

Figure **12f** is of characteristic curves showing a relationship between the external magnetic field and the bit length distribution with regard to the optical memory device shown in Figure **1**.

## DESCRIPTION OF THE PREFERRED EMBODIMENTS

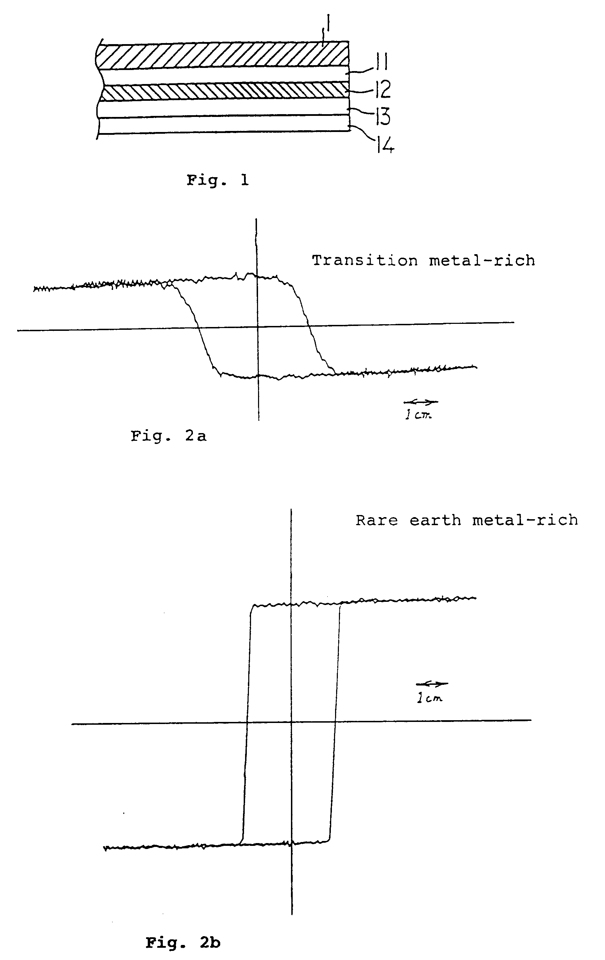

Figure **1** shows an optical memory device of this invention, which comprises a transparent substrate **1** made of glass, polycarbonate resins, acrylic resins or the like, a first transparent dielectric layer **11** of aluminum tantalum nitride, $(Al_{0.95}Ta_{0.05})_{0.5}N_{0.5}$, a rare earth transition metal alloy thin layer **12** of GdTbFe, GdTbDyFe, TbFeCo or the like, a second transparent dielectric layer **13** of aluminum tantalum nitride, and a reflective layer **14** of AlNi in that order. The composition of the aluminum tantalum nitride layer **11** can be represented by the formula, $(Al_{1-x}Ta_x)_yN_y$ wherein $O<x\leqq0.1$ and $y=0.5$. Table **1** shows the refractive index of the aluminum tantalum nitride layer **11** when the value **x** is changed in the range of 0 to 0.05. The aluminum tantalum nitride layer **11** was formed by the RF (radio frequency) magnetronsputtering method using an aluminum/tantalum alloy target that was prepared by the melting method, wherein a substrate was placed within a RF reactive sputtering apparatus, the inside of which was then maintained under a pressure of $1 \times 10^{-6}$ torr (0.133 mPa), and a sputtering gas containing Ar and $N_2$ (the gas pressure ratio of Ar to $N_2$ being 1) was supplied to the apparatus at a flow rate of 30 standard cubic cm/minutes under a sputtering gas pressure of 2 m torr (0.26 Pa). An RF voltage of 500 W was applied to the target.

## Table 1

| Values of x | Refractive index of the $(Al_{1-x}Ta_x)_{0.5}N_{0.5}$ layer |
|---|---|
| 0.00 | 2.03 |
| 0.01 | 2.05 |
| 0.02 | 2.07 |
| 0.03 | 2.07 |
| 0.04 | 2.07 |
| 0.05 | 2.07 |

It can be seen from Table 1 that the incorporation of Ta into the dielectric layer increases the refractive index of the dielectric layer, which results in an increase in the magneto-optical effect (i.e., the Kerr rotational angle).

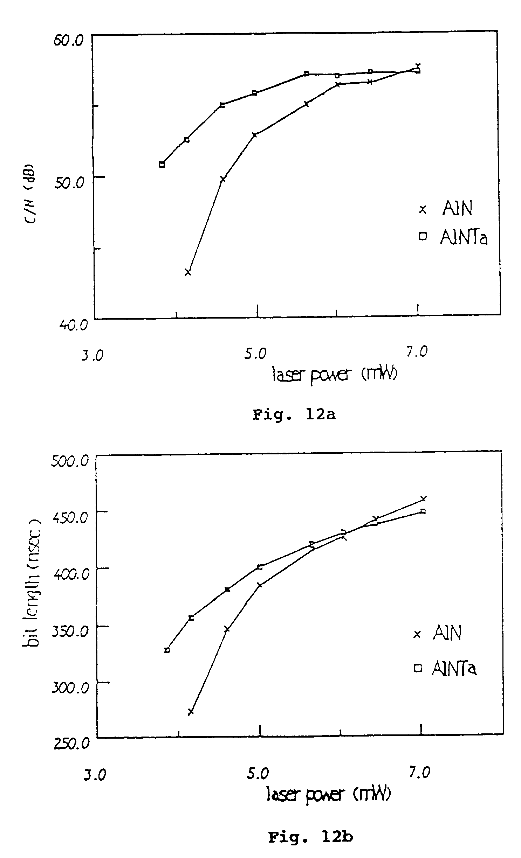

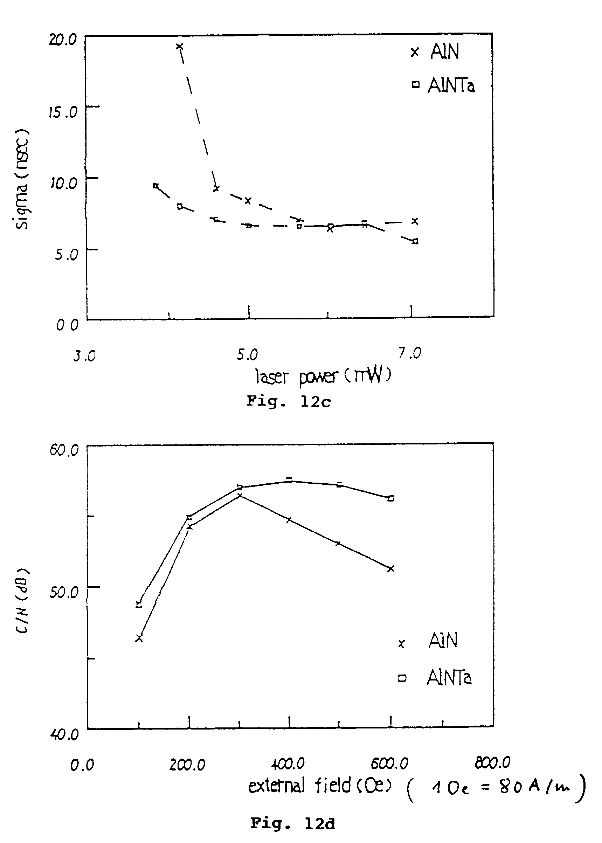

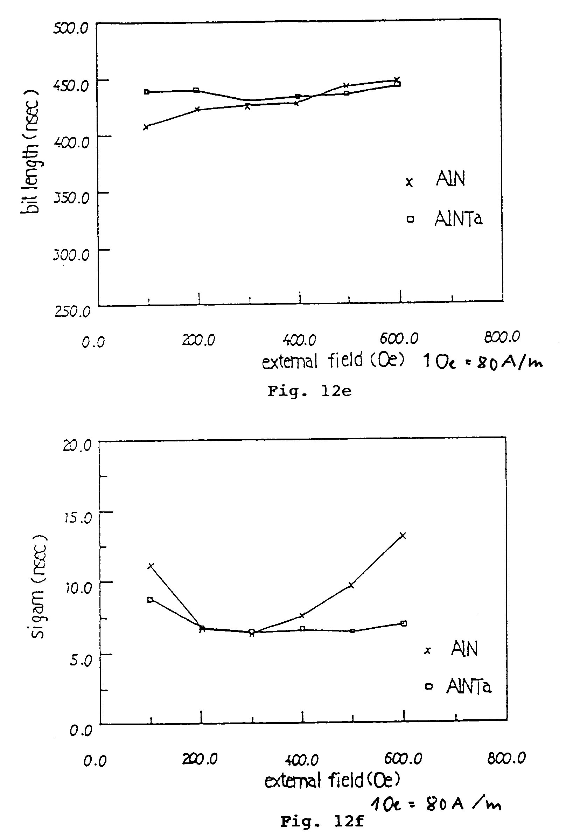

A disc of the above-mentioned optical memory device with a rare earth transition metal alloy thin layer 12 of $(Gd_{0.58}Tb_{0.42})_{0.27}Fe_{0.73}$ was used to determine the C/N ratio, the bit length and the bit length distribution by changing the write laser power and the external magnetic field under the conditions where the laser wavelength is 780 nm, the numerical aperture of an object lens is 0.6, the linear velocity of the disc is 5.6 m/sec., and the read laser power is 1 mW. The results are shown in Figures **12a** to **12f**.

Figure **12a** shows the change in the C/N ratio at the time when the write laser power is changed, which indicates that the transparent dielectric layer of AlNTa exhibits a higher C/N ratio than that of AlN even at a low write laser power level. Figure **12b** shows the change in the bit length at the time when the write laser power is changed, which indicates that the transparent dielectric layer of AlNTa exhibits a smaller change of the bit length than that of AlN at the time of changes of the write laser power. This means that bits can be recorded with a stabilized bit length. Figure **12c** shows the bit length distribution at the time when the write laser power is changed, which indicates that the transparent dielectric layer of AlNTa exhibits a smaller bit length distribution than that of AlN; that is, with an AlNTa layer, the scatter of bit length is so slight that bits can be stably written even at a low laser power level. Figure **12d** shows the change in the C/N ratio at the time when the external magnetic field is changed, which indicates that the transparent dielectric layer of AlNTa exhibits a higher C/N ratio than that of AlN. Figure **12e** shows the change in the bit length at the time when the external magnetic field is changed, which indicates that the transparent dielectric layer of AlNTa exhibits a smaller change of the bit length than that of AlN at the time of changes of the external magnetic field. This means that bits can be recorded with a stabilized bit length. Figure **12f** shows the bit length distribution at the time when the external magnetic field is changed, which indicates that the transparent dielectric layer of AlNTa exhibits a smaller bit length distribution than that of AlN at the time of changes of the external magnetic field.

The above-mentioned optical memory device has the following advantages: (1) Aluminum tantalum nitride is extremely stable and can be made into a finer layer than oxides; (2) Aluminum tantalum nitride that contains no oxygen as a component can remarkably reduce the possibility of oxidization of the recording medium layer; and (3) Aluminum tantalum nitride matches with rare earth transition metal alloy layers, resulting in excellent magnetic characteristics as shown in Figures **2a** and **2b** wherein the axis of ordinate indicates the Kerr rotational angle (0.1°/cm) and the axis of abscissa indicates the external magnetic field (1 kOe/cm where by 10e = 80 A/m). Figure **2a** shows the change in the magnetic characteristic with regard to a reference optical memory device in which aluminum nitride is used instead of aluminum tantalum nitride as the first and second dielectric layers **11** and **13** in the optical memory device shown in Figure **1** and the thin layer **12** is a transition metal-rich layer. Figure **2b** shows the change in the magnetic characteristic with regard to the optical memory device shown in Figure **1** in which aluminum tantalum nitride is used as the first and second dielectric layers **11** and **13** and the thin layer **12** is a rare earth transition metal-rich layer. It can be seen from Figures **2a** and **2b** that the optical memory device with the dielectric layers of aluminum tantalum nitride exhibits a larger Kerr rotational angle and a more improved hysteresis loop than the optical memory device with the dielectric layers of aluminum nitride.

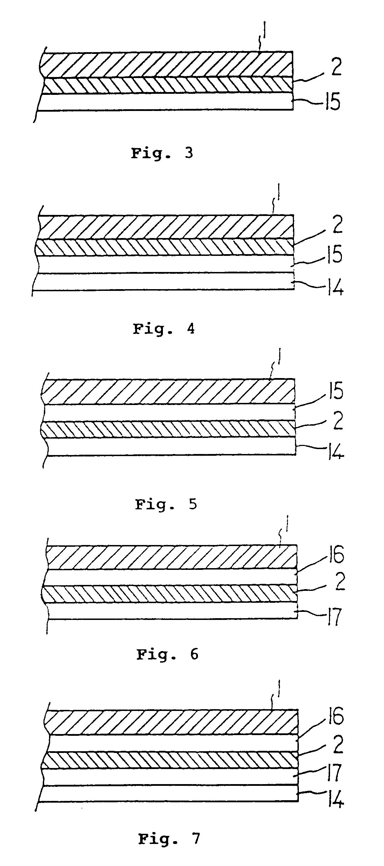

As mentioned above, an aluminum tantalum nitride layer is used as a protective layer for protecting the recording medium. Whatever material can be used for the recording medium, the optical memory device of this invention can be of any construction as long as aluminum tantalum nitride is used for at least one of the layers of the construction. Figures **3** to **7** show possible constructions of the optical memory device of this invention. The construction shown in Figure **3** comprises a transparent substrate **1**, a recording medium layer **2**, and an aluminum tantalum nitride layer **15** in this order. The construction shown in Figure **4** comprises a transparent substrate **1**, a recording medium layer **2**, an aluminum tantalum nitride layer **15**, and a reflective layer **14** in this order. The construction shown in Figure **5** comprises a transparent substrate **1**, an aluminum tantalum nitride layer **15**, a recording medium layer **2**, and a reflective layer **14** in this order. The construction of Figure **6** comprises a transparent substrate **1**, a first dielectric layer **16**, a recording medium layer **2**, and a second dielectric layer **17** in this order, wherein at least one of the first and second dielectric layers is made of aluminum tantalum nitride. The construction of Figure **7** comprises a transparent substrate **1**, a first dielectric layer **16**, a recording medium **2**, a second dielectric layer **17**, and a reflective layer **14** in this order, wherein at least one of the first and second dielectric layers is made of aluminum tantalum nitride. Moreover, the reflective layer **14** can be made of a material such as Cu, Ag or Al other than AlNi.

The aluminum tantalum nitride layer of this invention can be, of course, formed by the sputtering method in which a Ta chip is placed on an aluminum target.

## Claims

1. An optical memory device comprising a substrate (1), a recording medium layer (2), and one or more protective layers (15) for protecting said recording medium layer (2), wherein at least one of said protective layers comprises aluminium tantalum nitride represented by the formula: $(Al_{1-x}Ta_x)_yN_{1-y}$ wherein $O<x \leqq 0.1$ and y=0.5.

2. An optical memory recording device according to claim 1 wherein one protective layer (15;17) comprising aluminium tantalum nitride represented by said formula is disposed to the side of one face of the recording medium layer (2).

3. An optical memory device according to claim 2 wherein said substrate (1) is disposed to the side of the other face of the recording medium layer (2 in Fig. 3 and 4)

4. An optical memory device according to claim 3 wherein a reflective layer (14) is disposed to the side of said protective layer remote from the recording medium layer.

5. An optical memory device according to claim 2 wherein another protective layer (16 in Fig. 6 and 7) is disposed to the side of the other face of the recording medium, the another said protective layer being a dielectric layer.

6. An optical memory device according to claim 5 wherein a reflective layer (14) is disposed to the side remote from the recording medium layer of one (17) of said one and another protective layers and said substrate (1) is disposed to the side remote from the recording medium layer of the other (16) of said one and another protective layers.

7. An optical memory device according to claim 5 or 6 wherein said another protective layer comprises aluminium tantalum nitride represented by said formula.

8. An optical memory device according to claim 2 wherein the substrate (1) is disposed to the side of said aluminium tantalum nitride layer (15) remote from the recording medium layer and a reflective layer (14) is disposed to the side of the other face of the recording medium layer (2 in Fig. 5).

## Patentansprüche

1. Optische Speichervorrichtung mit einem Substrat (1), einer Aufnahmemittelschicht (2), und einer oder mehreren Schutzschichten (15) zum Schutz der Aufnahmemittelschicht (2), wobei mindestens eine der Schutzschichten Aluminiumtantalnitrid aufweist, dargestellt durch die Formel: $(Al_{1-x}Ta_x)_yN_{1-y}$, wobei $0 < x \leqq 0.1$ und y = 0.5 ist.

2. Optische Speichervorrichtung nach Anspruch 1, wobei eine durch die Formel dargestellte Schutzschicht (15; 17) mit Aluminiumtantalnitrid der einen Frontseite der Aufnahmemittelschicht (2) zugewandt liegt.

3. Optische Speichervorrichtung nach Anspruch 2, wobei das Substrat (1) der anderen Frontseite der Aufnahmemittelschicht (2 in Figur 3 und 4) zugewandt liegt.

4. Optische Speichervorrichtung nach Anspruch 3, wobei eine reflektierende Schicht (14) der Seite der Schutzschicht zugewandt liegt, die der Aufnahmemittelschicht abgewandt ist.

5. Optische Speichervorrichtung nach Anspruch 2, wobei eine andere Schutzschicht (16 in Figur 6 und 7) der anderen Seite des Aufnahmemittels zugewandt liegt, und wobei die andere Schutzschicht eine dielektrische Schicht ist.

6. Optische Speichervorrichtung nach Anspruch 5, wobei eine reflektierende Schicht (14) auf der von der Aufnahmemittelschicht abgewandten Seite einer (17) der einen oder anderen Schutzschicht liegt, und das Substrat (1) auf der von der Aufnahmeschicht abgewandten Seite der anderen (16) der einen oder anderen Schutzschicht liegt.

7. Optische Speichervorrichtung nach Anspruch 5 oder 6, wobei die andere Schutzschicht aus Aluminiumtantalnitrid besteht, welches duch die Formel dargestellt ist.

8. Optische Speichervorrichtung nach Anspruch 2, wobei sich das Substrat (1) auf der Seite der Aluminiumtantalnitridschicht (15) befindet, die sich von der Aufnahmemittelschicht entfernt befindet, und wobei eine reflektierende Schicht (14) auf der anderen Seite der Aufnahmemittelschicht (2 in Figur 5) liegt.


**Revendications**

1. Dispositif d'emmagasinage optique comprenant un substrat (1), une couche (2) de moyen d'enregistrement et une ou plusieurs couches protectrices (15) servant à protéger cette couche (2) de moyen d'enregistrement, au moins l'une de ces couches protectrices comprenant un nitrure d'aluminium et de tantale représenté par la formule : $(Al_{1-x}Ta_x)_yN_{1-y}$ dans laquelle $0 < x \leqq 0,1$ et y = 0,5.

2. Dispositif d'emmagasinage optique, pour enregistrement, suivant la revendication 1, dans lequel une couche protectrice (15;17) comprenant du nitrure d'aluminium et de tantale représenté par ladite formule, est disposée sur le côté de l'une des faces de la couche de moyen d'enregistrement (2).

3. Dispositif d'emmagasinage optique suivant la revendication 2, dans lequel le substrat (1) est disposé sur le côté de la seconde face de la couche de moyen d'enregistrement (2 aux figures 3 et 4).

4. Dispositif d'emmagasinage optique suivant la revendication 3, dans lequel une couche réflectrice (14) est disposée sur le côté de ladite couche protectrice qui est à l'opposé de la couche de moyen d'enregistrement.

5. Dispositif d'emmagasinage optique suivant la revendication 2, dans lequel une seconde couche protectrice (16 aux figures 6 et 7) est disposée sur le côté de la seconde face du moyen d'enregistrement, cette seconde couche protectrice étant une couche diélectrique.

6. Dispositif d'emmagasinage optique suivant la revendication 5, dans lequel une couche réflectrice (14) est disposée sur le côté qui est à l'opposé de la couche de moyen d'enregistrement par rapport à l'une (17) desdites première et seconde couches protectrices et le substrat (1) est disposé sur le côté opposé à la couche de moyen d'enregistrement par rapport à l'autre (16) desdites première et seconde couches protectrices.

7. Dispositif d'emmagasinage optique suivant la revendication 5 ou 6, dans lequel la seconde couche protectrice est constituée d'un nitrure d'aluminium et de tantale représenté par ladite formule.

8. Dispositif d'emmagasinage optique suivant la revendication 2, dans lequel le substrat (1) est disposé sur le côté de ladite couche de nitrure d'aluminium et de tantale (15) qui est à l'opposé de la couche de moyen d'enregistrement et une couche réflectrice (14) est disposée sur le côté de la seconde face de la couche de moyen d'enregistrement (2 à la figure 5).

Fig. 1

Transition metal-rich

1 cm.

Fig. 2a

Rare earth metal-rich

1 cm

Fig. 2b

Fig. 3

Fig. 4

Fig. 5

Fig. 6

Fig. 7

Fig. 8

Fig. 9

Fig. 10

Fig. 11

Fig. 12a

Fig. 12b

Fig. 12c

Fig. 12d

Fig. 12e

Fig. 12f